# FASCICULE DE BREVET EUROPEEN

(11) **EP 2 978 347 B1**
(45) Date de publication et mention de la délivrance du brevet: **24.05.2017**
(21) Numéro de dépôt: 14713821.8
(22) Date de dépôt: 26.03.2014
(51) Int. Cl.: A47J 37/04, A47J 37/06

(54) **FOUR**
OFEN
OVEN

(30) Priorité: 26.03.2013 BE 201300203
(43) Date de publication de la demande: 03.02.2016
(73) Titulaire: Cook'n Fit, 4347 Fexhe-le-Haut-Clocher (BE)
(72) Inventeur: DALCQ, Denis, 1350 Orp-Jauche (BE); DELBROUCK, Stéphane, 4347 Fexhe-Le-Haut-Clocher (BE)
(74) Mandataire: Gevers Patents
(86) Numéro de dépôt international: PCT/EP2014/056103
(87) Numéro de publication internationale: WO 2014/154775

(56) Documents cités:
- WO-A1-96/00027
- WO-A1-2010/027316
- US-A- 4 155 294
- US-A- 4 295 419
- US-A- 5 994 672

## Description

L'invention se rapporte à un panier de four et un four tel que revendiqués à la revendication 1.

Un exemple de panier est connu du document US 4,295,419 qui divulgue un four destiné à l'accueillir. Malheureusement, un tel panier requiert un système d'assemblage complexe. En effet, pour loger ce panier, le four divulgué dans ce document antérieur doit comporter une porte pour assurer une étanchéité et une séparation adéquate entre l'extérieur et l'intérieur du four, ceci afin de canaliser les odeurs. Ensuite, d'une part, le panier doit être entraîné par l'intermédiaire d'un arbre d'entrainement coopérant avec une saillie distale présente sur le panier, et d'autre part une saillie proximale également présente sur le panier doit être emboîtée dans un orifice d'accueil pour son maintien en position. Toutefois, ce document reste particulièrement muet quant au support de panier en rotation.

On connait également, du document US 5,994,672, un four à air chaud formé par un panier comprenant une première et une deuxième parties de panier, ledit panier tournant dans une chambre de cuisson. Un axe plein traversant le panier soutient lesdites première et deuxième parties du panier et permet la rotation de ce dernier. En outre, un système de distribution de chaleur alimente le panier en air chaud et un système de ventilation extrait l'air chaud de la chambre de cuisson par l'arrière du four. Par ailleurs, un convertisseur catalytique est monté juste à côté de la chambre de cuisson pour nettoyer l'air chauffé après la cuisson.

Malheureusement la présence de l'axe plein traversant le panier divulgué dans ce document antérieur complique l'assemblage des deux parties de panier ainsi que l'insertion du panier précédemment assemblé à la structure du four. En outre, lors de l'assemblage, par exemple après avoir démonté le panier lors d'un nettoyage, l'axe plein traversant doit être introduit dans une multitude d'orifices se succédant les uns après les autres, ce qui rend l'assemblage particulièrement complexe et implique une grande précision de fabrication pour que le système panier-axe soit aligné avec la structure du four afin d'assurer un fonctionnement correct de ce dernier. L'alignement du système panier-axe peut être encore rendu plus difficile à cause de déformations, par exemple à cause de déformations présentes sous le poids d'aliments chargés dans le panier à passer au four. Cet alignement est aussi problématique lorsque le panier présente des déformations liées à l'usure du panier, ceci étant notamment observé suite à de multiples ouvertures et fermetures du panier lors de son utilisation.

En outre, la présence de cet axe plein qui traverse le panier implique que les aliments le heurtent lors de la rotation du panier pendant le temps de cuisson, ce qui a pour conséquence d'écraser ou d'abimer les aliments. De plus, la différence de température entre l'axe plein traversant le panier et l'air contenu dans le volume du panier a pour résultat que les aliments risquent de rester collés sur l'axe.

L'invention a pour but de pallier les inconvénients mentionnés ci-dessus en proposant un panier de four de configuration simple, autant pour le four que pour le panier, facile à assembler et à nettoyer.

A cette fin, la présence des parois proximales des première et deuxième parties de panier froides ou tièdes, ne conduisant pas ou sensiblement pas la chaleur permet de simplifier considérablement la conception du four en ne nécessitant plus de porte additionnelle, sans pour autant générer un échappement d'odeur, une perte de chaleur et/ou perturber la rotation du panier. En outre, le panier est aisément démontable et est ainsi très simple à nettoyer, en particulier, il peut passer au lave-vaisselle.

Selon l'invention, la deuxième partie de panier reste logé dans le four en position d'ouverture de la première partie du panier lorsque l'utilisateur veut charger ou décharger le panier et ladite deuxième partie de panier comprend des moyens de suspension du panier sous la forme des premières et deuxièmes saillies. Ceci permet au panier de rester bien stabilisé pendant les multiples événements d'ouverture et fermeture du panier lors de son utilisation. Suivant l'invention, la première partie du panier est prévue pour coulisser par rapport à la deuxième partie de panier jusqu'à une complète ouverture de ce dernier, à la façon d'un tiroir. Il est préférable que la première partie de panier présente une forme aérée et légère pour que l'utilisateur puisse la manipuler facilement et ainsi en minimiser le poids pour optimiser les coûts de production.

Avantageusement, ladite première partie de panier du panier de four suivant l'invention présente une ouverture délimitée par un bord périmétrique, ledit bord périmétrique étant formé par une arête de ladite paroi latérale distale de ladite première partie de panier et par une arête de ladite paroi latérale proximale de ladite première partie de panier, et de deux arêtes) d'une surface extérieure de ladite première partie de panier, ladite deuxième partie de panier présentant une ouverture délimitée par un bord périmétrique, ledit bord périmétrique étant formé par une arête de ladite paroi latérale distale de ladite deuxième partie de panier et par une arête de ladite paroi latérale proximale de ladite deuxième partie de panier, et de deux arêtes d'une surface extérieure de ladite deuxième partie de panier, lesdites deux arêtes de surface extérieure de ladite deuxième partie de panier étant munies d'un rail de guidage agencé pour loger lesdites deux arêtes de surface extérieure, éventuellement munies d'un bourrelet, ou d'une lèvre, par exemple en saillie, de ladite première partie de panier.

La présence du bord bien défini sur la première partie de panier et sur la deuxième partie de panier permet que cette première partie coulisse facilement et s'emboite complètement dans la deuxième partie de panier lorsque le panier est en position fermée, à la façon d'un tiroir et de telle sorte que le panier forme un volume fermé. Par ailleurs, selon l'invention, il est facile, pour un utilisateur ordinaire, d'ouvrir et de fermer le panier, d'effectuer la recharge du panier et/ou de le nettoyer puisque l'utilisateur peut en désassembler facilement et complétement les différents éléments une fois qu'il est vide, par exemple pour le laver dans un lave-vaisselle commun.

Avantageusement, suivant l'invention, la surface de ladite paroi proximale de ladite première partie de panier et la surface de ladite paroi proximale de ladite deuxième partie de panier sont chacune respectivement plus grande que la paroi proximale de ladite première partie de panier et de ladite deuxième partie de panier inscrite dans ledit volume fermé.

La surface de la paroi proximale des première et deuxième parties de panier est formée directement par ou revêtue par un matériau ne conduisant sensiblement pas la chaleur. En particulier, cette paroi proximale peut être formée par des éléments en polyamide séparés par une lame d'air.

Préférentiellement, la paroi proximale de la première partie de panier présente un moyen de préhension. Ce moyen de préhension peut prendre différentes formes de réalisation. Il peut s'agir d'une encoche dans laquelle une poignée sera introduite pour ouvrir, vider et/ou refermer le panier, d'une poignée en saillie sortante, fixée à ou moulée conjointement à la paroi proximale de première partie de panier ou encore d'une poignée creusée, directement dans ladite paroi proximale de la première partie de panier, par exemple obtenue par moulage.

Dans une forme de réalisation particulière, ladite première partie de panier est une partie inférieure destinée à recevoir l'aliment à passer au four.

Dans un mode de réalisation, ladite première saillie est une saillie creuse agencée pour loger un arbre d'entraînement. Dans une variante, ladite première saillie est une saillie pleine agencée pour être logée dans un arbre d'entraînement.

Avantageusement, l'axe de rotation du panier à four suivant l'invention est excentré par rapport à un axe longitudinal médian dudit panier permettant que ladite première partie de panier présente une contenance volumique différente d'une contenance volumique de ladite deuxième partie de panier, et de préférence inférieure.

Avantageusement, suivant l'invention, ledit panier comprend au moins un sous panier avec couvercle, en particulier un double-grillage, agencé pour être posé et emboîté sur ladite première partie de panier. En outre, le panier peut être utilisé avec plusieurs accessoires pour faciliter la cuisson de certains aliments, par exemple le sous panier avec couvercle permet à l'utilisateur de coincer des croquettes , comme des croquettes de fromage et ainsi les cuire de manière uniforme en conservant leur forme originale. Les aliments qui ne peuvent pas supporter un mouvement de rotation dans un tambour sous peine de se dégrader et de se transformer en purée, sont ainsi positionnés dans un sous panier de faible épaisseur avec un couvercle qui pince les aliments et les confine dans un volume au sein duquel la rotation n'est pas possible. Ces accessoires donnent une grande liberté à l'utilisateur pour cuire tout type d'aliments à passer au four.

La présente invention se rapporte également à un four selon la revendication 1. Par conséquent, l'accès au four est très simple pour l'utilisateur dès lors qu'il n'y a pas de porte à ouvrir, tout en évitant les pertes de chaleurs intempestives qui nuisent au rendement énergétique ainsi que les fuites d'odeurs, et tout en évitant les risques de brûlures. En plus, le four présente donc une forme compacte sans porte extérieure.

En outre, la configuration particulière du panier et du four selon la présente invention a permis d'atteindre un four qui est, comme mentionné précédemment très compact, mais qui ne demande aucune étape d'assemblage de panier complexe. Au contraire, les saillies de suspension du panier sont solidaires du panier, permettant ainsi de se passer d'un axe traversant le panier et réduisant le remontage du panier après nettoyage, tout en permettant de s'affranchir de la porte du four et finalement d'obtenir une première partie de panier qui est comme un tiroir que l'on ouvre, rempli et referme avant de démarrer le fonctionnement du four. La simplicité déconcertante tant du panier, que du four, sa compacité et sa simplicité d'utilisation en fonctionnement en font un produit aux avantages surprenants dont le panier peut être à de très nombreuses reprises passé au lave-vaisselle pour nettoyage avant d'être remonté facilement.

Avantageusement, suivant l'invention, ledit moyen de support de panier comprend au moins deux cavités, une première cavité distale de support et une deuxième cavité proximale de support, ladite première cavité distale de support étant agencée pour accueillir ladite première saillie dudit panier, ladite deuxième cavité proximale de support étant agencée pour accueillir ladite deuxième saillie dudit panier, lesdites première et deuxième cavités de support étant reliées l'une à l'autre de telle façon qu'elles n'entravent pas l'ouverture de ladite première partie de panier par coulissement lorsque le four est à l'arrêt. La forme des cavités est adaptée selon la forme des saillies de telle sorte que, lorsque le panier est suspendu sur l'axe, il reste stable lors des mouvements de rotation et lors des multiples événements d'ouverture et fermeture du panier lors de son utilisation. La coopération entre les cavités et les saillies joue un rôle déterminant pour qu'une rotation correcte du panier puisse être effectuée, c'est-à-dire une rotation qui présente une friction minimale favorisant une cuisson régulière des aliments à passer au four et augmentant la durée de vie du panier, tout en assurant la simplicité de montage et de démontage du panier de son four.

Dans une forme de réalisation particulière selon l'invention, la première cavité distale de support est concave et comporte un fond sur lequel ladite première saillie dudit panier repose, ladite deuxième cavité proximale de support étant également concave et comportant également un fond sur lequel ladite deuxième saillie dudit panier repose.

Dans une autre forme de réalisation selon l'invention, ladite deuxième cavité proximale de support est traversante.

Avantageusement, suivant l'invention, ledit moyen de support de panier présente une partie longitudinale horizontale qui est fixée à l'intérieur dudit récipient obturable sur le ciel dudit four, de laquelle une partie latérale distale et une partie latérale proximale s'étendent vers le bas, qui comportent respectivement à leurs extrémités s'étendant transversalement vers l'intérieur, ladite première cavité distale de support et ladite deuxième cavité proximale de support.

Avantageusement, suivant l'invention, ledit moyen de support de panier comprend une paroi latérale proximale de support et une paroi latérale distale de support, sensiblement parallèles auxdites parois latérales proximales dudit panier, ladite paroi latérale distale de support étant munie de ladite première cavité distale de support agencée pour loger et soutenir ladite première saillie dudit panier, ladite paroi latérale proximale de support étant munie de ladite deuxième cavité proximale de support agencée pour loger et soutenir ladite deuxième saillie dudit panier, ladite paroi latérale proximale de support et ladite paroi latérale distale de support étant reliées l'une à l'autre par au moins une paroi extérieure, ladite paroi latérale proximale de support étant prolongée par au moins deux parties de cette paroi extérieure qui s'étendent dans une direction parallèle audit axe de rotation, ladite paroi latérale distale de support étant aussi prolongée par au moins deux parties de cette paroi extérieure qui s'étendent dans une direction parallèle audit axe de rotation, au moins une partie de cette paroi extérieure, s'étendant de la paroi latérale distale de support, étant reliée à une desdites parties de cette paroi extérieure s'étendant de la paroi latérale proximale de support, ledit moyen de support de panier étant agencé pour loger ledit panier avec lesdites première et deuxième saillies du panier en suspension dans lesdites première et deuxième cavités de support.

Ce moyen de support du panier présentant une forme sensiblement enveloppante de la première partie de panier, soit en permettant d'y accueillir simplement une section transversale (comme un cadre autour de la section transversale) mais également de suspendre le panier par les premières et deuxièmes saillies reposant dans les cavités de support présentes sur le moyen de support, soit en enveloppant bien plus que la section transversale, comme par une forme de demi-cylindre, duquel des partie latérales peuvent être omises pour en réduire le poids. Dans cette configuration, la partie de fond du demi-cylindre ou du pseudo-demi-cylindre dans lequel des parties de parois de demi-cylindre sont évidées permet de recueillir les morceaux d'aliments et miettes qui s'échappent à la cuisson. Le moyen de support est de préférence introduit via l'ouverture du récipient obturable formant le four par coulissement, soit introduit dans un double rail latéral, ou tout autre moyen équivalent.

Le moyen de support est donc aisément démontable et nettoyable. C'est entre autre la coopération avec ce moyen de support qui permet de s'affranchir de la porte extérieure du four en fournissant les moyens de support à l'axe de rotation formé par les saillies alignées dans la partie médiane horizontale du récipient obturable afin que la configuration du four reste simple et compacte.

Ce moyen de support peut présenter des parties latérales plus au moins pleines et le fabricant dispose d'un grand choix de design et de mode de fabrication pour proposer un moyen de support qui soit efficace et rentable à sa production.

L'invention sera maintenant décrite plus en détail à l'aide des dessins qui illustrent une forme de réalisation préférée du panier de four.
La figure 1 est une vue en perspective d'un four, par exemple d'un four à frites et d'un panier de four selon la présente invention.
La figure 2 est une vue en perspective du panier illustrant le coulissement de la première partie de panier par rapport à la deuxième partie de panier.
La figure 3 montre une vue de face des première et deuxième parties de panier, l'arête de la paroi latérale proximale de la première partie de panier et l'arête de la paroi latérale proximale de la deuxième partie de panier.
La figure 4 illustre l'agencement du panier dans le four en position fermée selon l'invention.
La figure 5 illustre l'agencement du panier dans le four en position d'ouverture selon l'invention.

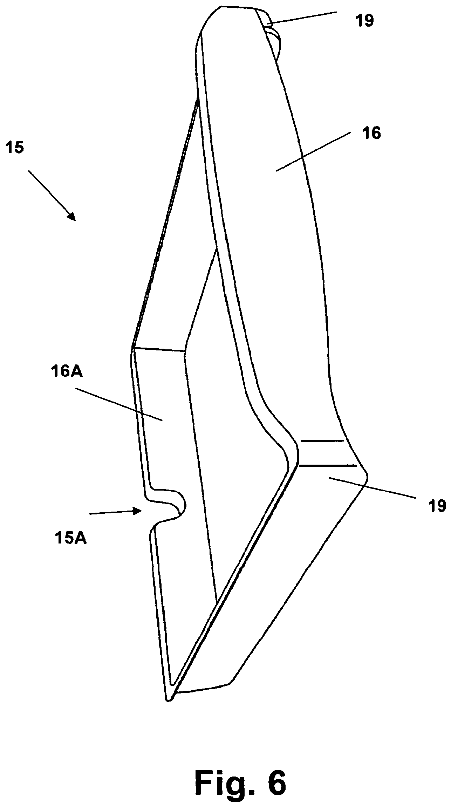

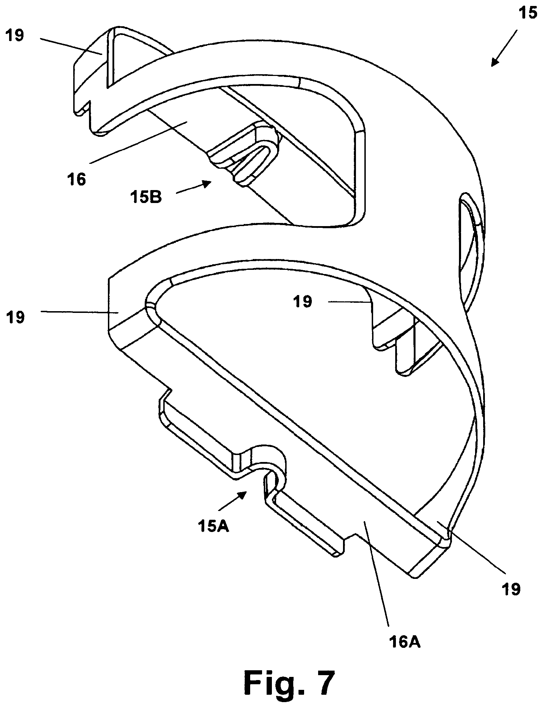

Les figures 6 et 7 illustrent des variantes du moyen de support du panier selon l'invention.
La figure 8 illustre un autre moyen de support de panier selon l'invention.

Sur les figures, les éléments identiques ou analogues portent les mêmes références.

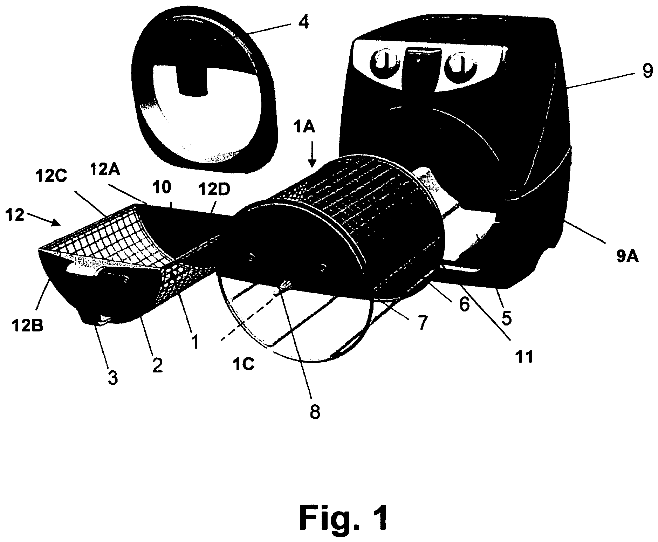

La figure 1 est une vue en perspective d'un exemple d'un four, par exemple, à frites suivant l'invention dans lequel le panier de four 1+1A est représenté en dehors du récipient obturable 9 qui est prévu pour loger le panier 1+1A. Dans le mode de réalisation représenté, le moyen de support 4 joue également le rôle d'un cache d'une partie frontale du four.

La figure 1 illustre que le panier de four 1+1A selon l'invention présente une structure cylindrique rotative décrivant un volume fermé 6, les première 1 et deuxième 1A parties de panier étant solidaires l'une de l'autre en rotation autour de l'axe de rotation 1C. L'axe de rotation 1C est excentré par rapport à un axe longitudinal médian du panier 1+1A, ce qui permet que la première partie de panier 1 présente une contenance volumique différente de la contenance volumique de la deuxième partie de panier 1A, de préférence inférieure.

Le panier de four 1+1A comprend une paroi latérale distale de panier 10+11, c'est-à-dire la paroi la plus éloignée de l'utilisateur, et une paroi latérale proximale formée par la paroi latérale proximale 2 de la première partie de panier 1 et par la paroi latérale proximale 7 de la deuxième partie de panier 1A. La paroi latérale distale de panier 1+1A est formée par la paroi latérale distale 10 de la première partie de panier 1 et par la paroi latérale distale 11 de la deuxième partie de panier 1A. Cette paroi latérale distale 10+11 est perpendiculaire à l'axe de rotation 1C, et peut être pleine ou aérée (par exemple lorsqu'il s'agit d'un grillage ou de toute autre configuration présentant des ouvertures de formes variées).

Le panier 1+1A est prévu pour une utilisation simple et pratique, le poids du panier jouant un rôle important à cette fin. Cette forme aérée et la fabrication du panier dans un matériau léger permet de réduire le poids du panier. Le grillage de la structure cylindrique définit le volume fermé 6, qui est un volume vide. Ce volume vide 6 permet un libre mouvement des aliments à l'intérieur du panier lors de la rotation pendant le temps de cuisson. Ainsi, les aliments conservent leur forme originale et la cuisson se réalise d'une manière uniforme donnant aux aliments l'apparence désirée par l'utilisateur.

La première partie de panier 1 présente un moyen de préhension sous forme d'une poignée 3, ce moyen de préhension peut aussi bien être une poignée creuse ou simplement un crochet dans lequel l'utilisateur pourrait fixer une poignée mobile. Les parois latérales proximales 2, 7 de la première 1 et de la deuxième 1A partie de panier sont des parois froides ou tièdes, ne conduisant sensiblement pas la chaleur. Ainsi, l'utilisateur peut saisir directement le panier depuis l'extérieur du four pour ouvrir le panier en tirant sur le moyen de préhension sans risquer de se brûler.

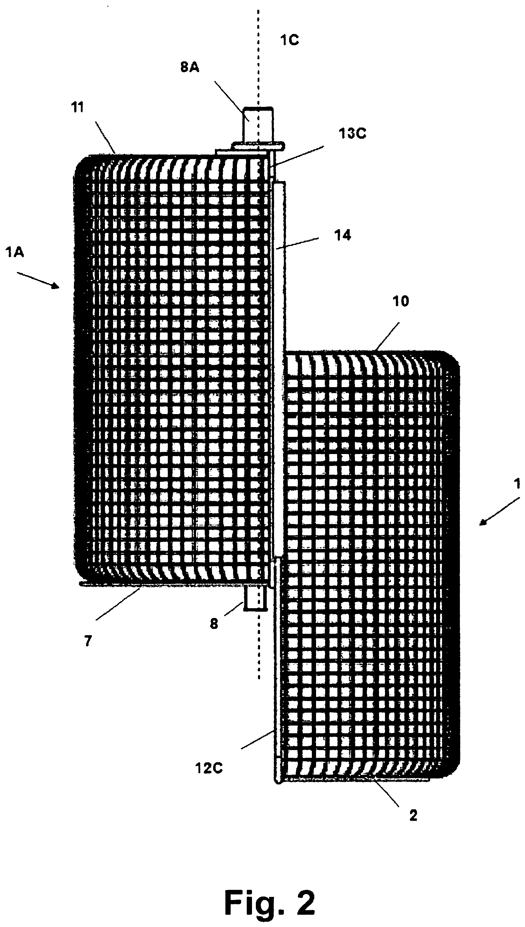

La deuxième partie de panier 1A présente une première saillie 8A solidaire de et s'étendant à partir de la paroi latérale distale 11 de la deuxième partie de panier 1A vers l'extérieur du panier, comme illustré à la figure 2. Par ailleurs, la deuxième partie de panier 1A comprend une deuxième saillie 8 solidaire de et s'étendant à partir de la paroi latérale proximale 7 de la deuxième partie de panier 1A. Les saillies 8, 8A sont alignées l'une et l'autre selon un même axe de rotation de panier 1C. La première saillie 8A peut être une saillie creuse agencée pour loger un arbre d'entraînement (non illustré), ou une saillie pleine agencée pour être logée dans un arbre d'entraînement (non illustré). L'arbre d'entrainement horizontal est agencé pour être entraîné par un moteur situé à l'opposé de ladite ouverture 9A du récipient obturable 9.

Le four selon l'invention tel qu'illustré comprend une première cavité distale de support agencée pour accueillir ladite première saillie 8A dudit panier à travers laquelle passe l'arbre d'entrainement et un moyen de support de panier 15 sous la forme d'un cache dans cette forme de réalisation illustrée qui comprend au moins une deuxième cavité proximale de support 15B, agencée pour accueillir ladite deuxième saillie 8 dudit panier, ledit moyen de support étant prévu pour ne pas entraver l'ouverture de ladite première partie de panier 1 par coulissement lorsque le four est à l'arrêt.

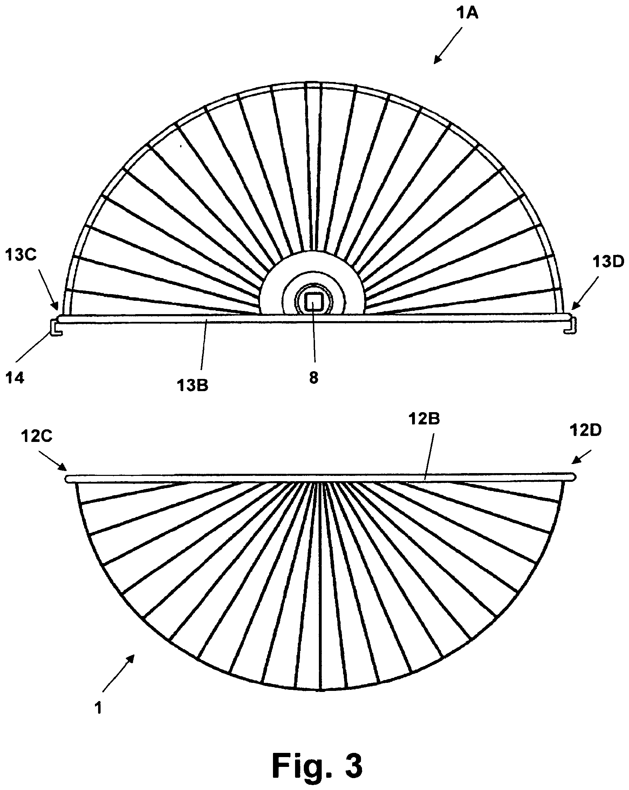

Les figures 2 et 3 illustrent l'agencement de la première partie de panier 1 et de la deuxième partie de panier 1A. La première partie de panier 1 présente une ouverture délimitée par le bord périmétrique référencé sous le numéro 12 à la figure 1, ce bord périmétrique 12 étant formé par l'arête 12A de la paroi latérale distale de la première partie de panier 1, par l'arête 12B de la paroi latérale proximale de la première partie de panier 1, et par deux arêtes 12C, 12D de la surface extérieure de la première partie de panier 1. La deuxième partie de panier 1A présente une ouverture délimitée par le bord périmétrique 13, ce bord périmétrique 13 étant formé par l'arête (non visible) de la paroi latérale distale de la deuxième partie de panier 1A, par l'arête 13B de la paroi latérale proximale de la deuxième partie de panier 1A, et par deux arêtes 13C, 13D de la surface extérieure de la deuxième partie de panier 1A. Les deux arêtes 13C, 13D de la surface extérieure de la deuxième partie de panier 1A sont munies d'un rail de guidage 14 agencé pour loger les deux arêtes de surface extérieure 12C, 12D présentes sur la première partie de panier 1, ces deux arêtes étant éventuellement munies d'un bourrelet ou d'une lèvre, par exemple en saillie. Le rail de guidage 14 peut être un rail en continu comme celui représenté à la figure 2, mais il peut être aussi formé par des segments de rails de longueur et de forme variées. Ceci permet que la première partie de panier 1 coulisse facilement sur la deuxième partie de panier 1A et qu'il soit facile pour l'utilisateur d'ouvrir et de fermer le panier de four 1+1A lors de son utilisation. Ainsi, le panier 1+1A et le four peuvent être assemblés et désassemblés facilement pour faciliter leur utilisation et leur nettoyage.

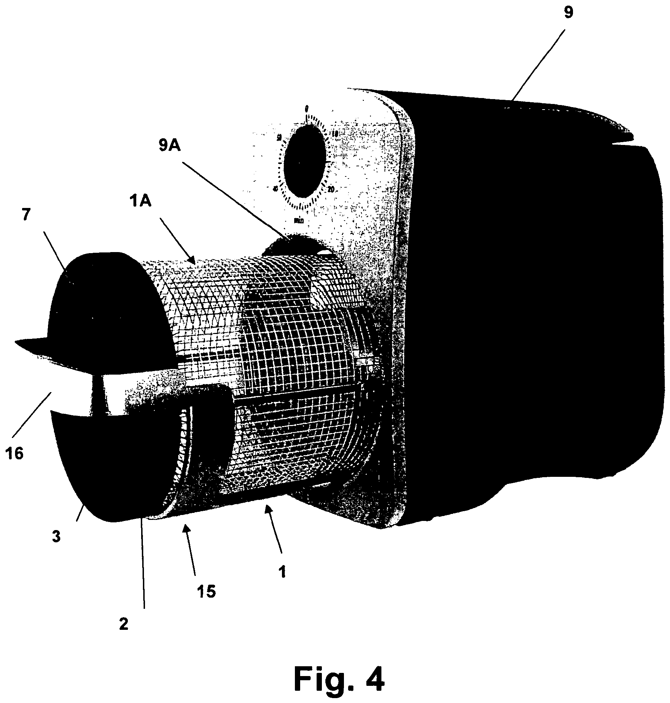

Selon le mode de réalisation illustré à la figure 4, lorsque les deux parties 1, 1A du panier sont emboîtées l'une dans l'autre, la surface ainsi formée par l'association de la surface de la paroi proximale 2 de la première partie de panier 1 et la surface de la paroi proximale 7 de la deuxième partie de panier 1A est plus grande que la surface délimitée par la circonférence inscrite dans le volume fermé 6. La surface de la paroi proximale 2 de la première partie de panier 1 et la surface de la paroi proximale 7 de la deuxième partie de panier 1A sont réalisées ou recouvertes par un matériau qui ne conduit pas la chaleur et qui peut être sensiblement étanche.

En outre, ces deux parois proximales 2, 7 de la première partie de panier 1 et de la deuxième partie de panier 1A forment le moyen de fermeture du récipient obturable 9. Le four selon l'invention ne nécessite donc pas de porte. Ceci facilite aussi l'utilisation du four puisque l'utilisateur n'a pas besoin d'ouvrir une porte pour avoir accès au panier et ainsi charger ou décharger ce dernier des aliments à passer au four. L'absence de porte réduit aussi les coûts de fabrication et les risques que l'utilisateur se brûle avec la porte.

Des accessoires peuvent être prévus pour faciliter l'utilisation du panier 1+1A selon le type d'aliments à passer au four. Le panier 1+1A tel que représenté est particulièrement adéquat, par exemple pour cuire des frites. Les frites sont déposées à l'intérieur du panier 1+1A et la cuisson est réalisée d'une manière uniforme lors de la rotation du panier pendant le temps de cuisson.

Par contre, si l'utilisateur veut cuire des croquettes de fromage, celles-ci sont déformées lors de la rotation du panier pendant le temps de cuisson. Dans ce cas, un exemple d'accessoire peut être constitué par un sous panier avec couvercle, en particulier un double-grillage, agencé pour être posé et emboîté sur ladite première partie de panier 1. Ce double-grillage permet de fixer et de retenir les croquettes de fromage pour garantir qu'elles conservent leur forme originale lors de leur passage au four.

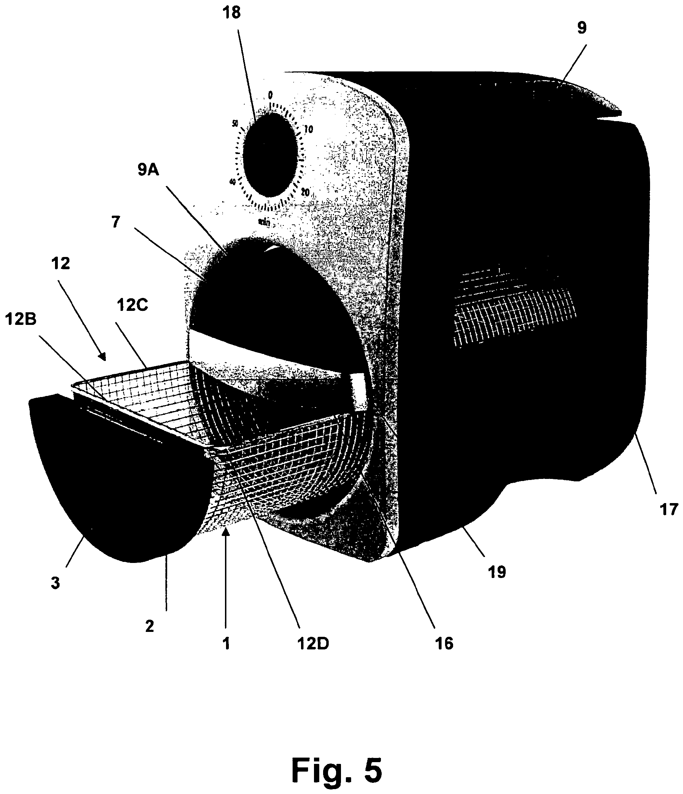

Les figures 4 et 5 illustrent l'agencement du panier dans le four lorsque le panier 1+1A présente une position de fermée (figure 4) et une position ouverte (figure 5) selon l'invention. On note que le four présente une forme compacte. Le four comprend en outre le récipient obturable 9, qui peut présenter une fenêtre 17 pour permettre à l'utilisateur de surveiller la cuisson des aliments à passer au four. Le four comprend également une source de chaleur permettant de souffler de la chaleur, c'est-à-dire de l'air chaud, à l'intérieur du récipient obturable 9. Sur la partie supérieure extérieure du récipient obturable 9, un trou d'aération est prévu et agencé pour permettre de contrôler l'échappement (la sortie) de la chaleur hors du récipient 9. Sur la face frontale du récipient obturable 9, des moyens de commande 18 sont visibles. Leur actionnement permet d'amener le moteur, situé à l'opposé de l'ouverture 9A, en rotation. Le four comprend en outre un moyen de support 15 du panier présentant une paroi latérale proximale de support 16 visible sur la face frontale du récipient obturable 9.

La figure 4 présente le panier 1+1A avec la première 1 et la deuxième 1A parties de panier solidarisées l'une à l'autre suite au coulissement de la première partie de panier 1 sur la deuxième partie de panier 1A.

Sur cette figure, le moyen de support de panier 15 enveloppe et accueille le panier 1+1A en se plaçant sous ce dernier, mais dans une variante selon la présente invention, le moyen de support est simplement sous la forme d'un cadre et comprend lesdites deux cavités, la première cavité distale de support 15A et la deuxième cavité proximale de support 15B, ladite première cavité distale de support 15A étant agencée pour accueillir ladite première saillie 8A dudit panier, ladite deuxième cavité proximale de support 15B étant agencée pour accueillir ladite deuxième saillie 8 dudit panier, lesdites première 15A et deuxième 15B cavités de support étant reliées l'une à l'autre par une structure en forme de cadre de telle façon qu'elles n'entravent pas l'ouverture de ladite première partie de panier 1 par coulissement lorsque le four est à l'arrêt.

Le four présente une forme moderne et simple étant assemblé de manière compacte pour fournir au marché un four présentant des dimensions réduites, ce qui est pratique pour les cuisines modernes et pour les espaces de rangement qui ont tendance à être peu spacieux. Bien évidemment, d'autres arrangements et configurations des composants internes et externes du four peuvent se présenter et entrent dans le cadre de la présente invention. Les dessins présentés ne sont pas limitatifs.

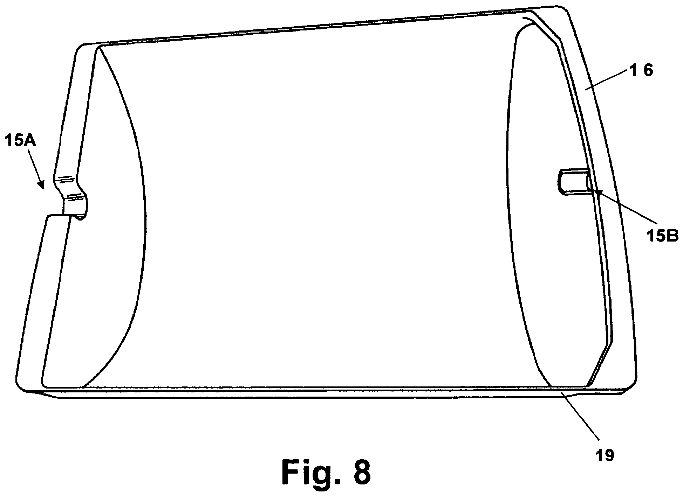

La figure 8 illustre un autre mode de réalisation du moyen de support de panier 15. Le moyen de support de panier 15 de la figure 8 supporte et accueille le panier 1+1A. Le moyen de support de panier 15 comprend au moins deux cavités, une première cavité distale de support 15A et une deuxième cavité proximale de support 15B, cette dernière pouvant être ou non traversante. La première cavité distale de support 15A est agencée pour accueillir la première saillie 8A du panier tandis que la deuxième cavité proximale de support 15B est agencée pour accueillir la deuxième saillie 8 du panier. Les première 15A et deuxième 15B cavités de support sont reliées l'une à l'autre de telle façon qu'elles n'entravent pas l'ouverture de ladite première partie de panier 1 par coulissement lorsque le four est à l'arrêt.

La première cavité distale de support 15A est concave et comporte un fond sur lequel ladite première saillie 8A du panier prend appui et repose. De même, la deuxième cavité proximale de support 15B est concave et comporte un fond sur lequel la deuxième saillie 8 du panier prend appui. De cette façon le panier 1+1A est suspendu dans le four et est logé partiellement dans le moyen de support. La forme des cavités 15A, 15B correspond à la forme des saillies 8A, 8 ce qui joue un rôle déterminant pour rendre le panier stable lors de sa rotation. De cette façon le panier suspendu effectue une rotation régulière, ce qui est souhaité afin que les aliments à passer au four soient cuits d'une manière uniforme et que la durée de vie du panier soit augmentée. De plus, la suspension du panier facilite le désassemblage du four, par exemple lors d'une opération de nettoyage.

Le moyen de support de panier 15 comprend une paroi latérale proximale de support 16 et une paroi latérale distale de support 16A, sensiblement parallèles aux parois latérales proximales 2, 7 du panier illustré à la figure 1. La paroi latérale distale de support 16A est munie de la première cavité distale de support 15A agencée pour loger et soutenir la première saillie 8A du panier. La paroi latérale proximale de support 16 est munie quant à elle de la deuxième cavité proximale de support 15B agencée pour loger et soutenir la deuxième saillie 8 du panier. De préférence, la distance entre cette paroi latérale proximale de support 16 et les parois latérales proximales 2, 7 de la première 1 et de la deuxième 1A partie de panier doit être suffisante pour permettre la rotation du panier qui doit pouvoir tourner sans problème, c'est-à-dire sans rencontrer d'obstacle qui pourrait causer un blocage, le moyen de support de panier 15 restant en position fixe lors de la rotation.

La paroi latérale proximale de support 16 et la paroi latérale distale de support 16A sont reliées l'une à l'autre par au moins une paroi unique extérieure 19 qui s'étend entre les deux dans une direction parallèle à l'axe de rotation. Le moyen de support de panier 15 présente une longueur au moins supérieure à une longueur de panier, éventuellement additionnée d'une épaisseur du moyen de préhension de manière à permettre une rotation aisée du panier dans le moyen de support de panier 15.

Il est bien entendu que la présente invention n'est en aucune façon limitée aux formes de réalisation décrites ci-dessus et que bien des modifications peuvent y être apportées sans sortir du cadre des revendications annexées. Par exemple, selon un autre mode de réalisation, le moyen de support de panier présente une partie longitudinale horizontale qui est fixée à l'intérieur du récipient obturable sur le ciel du four, de laquelle une partie latérale distale et une partie latérale proximale s'étendent vers le bas, qui comportent respectivement à leurs extrémités s'étendant transversalement vers l'intérieur, la première cavité distale de support et la deuxième cavité proximale de support. Ce moyen de support présente une forme de cerceau qui est particulièrement utile lorsque la configuration ou l'assemblage du four se voit favorisée par le moyen de support retenu dans la partie supérieure du récipient obturable.

## Revendications

1. Four comprenant un récipient obturable (9) présentant une ouverture (9A), comprenant une source de chaleur permettant de souffler de la chaleur à l'intérieur dudit récipient obturable (9), comprenant un arbre d'entrainement horizontal agencé pour être entraîné par un moteur situé à l'opposé de ladite ouverture (9A), comprenant des moyens de commande (18) pour amener ledit moteur en rotation et ladite source de chaleur à une température prédéterminée, et un panier décrivant un volume fermé (6) agencé pour entrer en rotation autour d'un axe de rotation de panier (1C), ledit four comprenant en outre un moyen de support (15) dudit panier et ledit panier comprenant une première partie de panier (1) et une deuxième partie de panier (1A), lesdites première (1) et deuxième (1A) parties de panier étant solidaires l'une de l'autre en rotation, et étant coulissantes, ladite première partie de panier (1) coulissant dans une direction parallèle audit axe de rotation (1C), par rapport à ladite deuxième partie de panier (1A), chacune des première (1) et deuxième (1A) parties de panier présentant une paroi latérale distale (10,11) c'est-à-dire la paroi la plus éloignée de l'utilisateur, perpendiculaire audit axe de rotation de panier (1C), chacune des première (1) et deuxième (1A) parties de panier présentant une paroi latérale proximale (2, 7), ledit panier présentant une première saillie (8A) solidaire de et s'étendant de ladite paroi latérale distale (11) de ladite deuxième partie de panier (1A) vers l'extérieur dudit panier, et une deuxième saillie (8) solidaire de et s'étendant de ladite paroi latérale proximale (7) de ladite deuxième partie de panier (1A) vers l'extérieur dudit panier, lesdites première (8A) et deuxième (8) saillies étant alignées l'une et l'autre selon ledit axe de rotation de panier (1C), ladite première saillie (8A) étant prévue pour être entraînée par ledit arbre d'entraînement, **caractérisé en ce que** lesdites parois latérales proximales (2, 7) de ladite première (1) et de ladite deuxième (1A) partie de panier sont des parois froides ou tièdes, ne conduisant sensiblement pas la chaleur, **en ce que** ladite première partie de panier (1) présente un moyen de préhension (3), et **en ce que** ledit récipient obturable (9) est fermé par lesdites parois latérales proximales (2, 7) froides ou tièdes, ne conduisant sensiblement pas la chaleur de ladite première (1) et de ladite deuxième (1A) partie de panier.

2. Four selon la revendication 1, **caractérisé en ce qu'**il comprend une première cavité distale de support (15A) agencée pour accueillir ladite première saillie (8A) dudit panier et **en ce que** ledit moyen de support de panier (15) comprend au moins une deuxième cavité proximale de support (15B), agencée pour accueillir ladite deuxième saillie (8) dudit panier, ledit moyen de support étant prévu pour ne pas entraver l'ouverture de ladite première partie de panier (1) par coulissement lorsque le four est à l'arrêt.

3. Four selon la revendication 1, **caractérisé en ce que** ledit moyen de support de panier (15) comprend au moins deux cavités, une première cavité distale de support (15A) et une deuxième cavité proximale de support (15B), ladite première cavité distale de support (15A) étant agencée pour accueillir ladite première saillie (8A) dudit panier, ladite deuxième cavité proximale de support (15B) étant agencée pour accueillir ladite deuxième saillie (8) dudit panier, lesdites première (15A) et deuxième (15B) cavités de support étant reliées l'une à l'autre de telle façon qu'elles n'entravent pas l'ouverture de ladite première partie de panier (1) par coulissement lorsque le four est à l'arrêt.

4. Four selon la revendication 2 ou la revendication 3, **caractérisé en ce que** ladite première cavité distale de support (15A) est au moins concave et comporte un fond sur lequel ladite première saillie (8A) dudit panier repose, ladite deuxième cavité proximale de support (15B) étant également concave et comportant également un fond sur lequel ladite deuxième saillie (8) dudit panier repose.

5. Four selon la revendication 4, **caractérisé en ce que** ladite deuxième cavité proximale de support (15B) est traversante.

6. Four selon l'une quelconque des revendications 2 à 3, **caractérisé en ce que** ledit moyen de support de panier (15) présente une partie longitudinale horizontale qui est fixée à l'intérieur dudit récipient obturable (9) sur le ciel dudit four, de laquelle une partie latérale distale et une partie latérale proximale s'étendent vers le bas, qui comportent respectivement à leurs extrémités s'étendant transversalement vers l'intérieur, ladite première cavité distale de support (15A) et ladite deuxième cavité proximale de support (15B).

7. Four selon l'une quelconque des revendications 2 à 6, **caractérisé en ce que** ledit moyen de support de panier (15) comprend une paroi latérale proximale de support (16) et une paroi latérale distale de support (16A), sensiblement parallèles auxdites parois latérales proximales (2) et (7) dudit panier, ladite paroi latérale distale de support (16A) étant munie de ladite première cavité distale de support (15A) agencée pour loger et soutenir ladite première saillie (8A) dudit panier, ladite paroi latérale proximale de support (16) étant munie de ladite deuxième cavité proximale de support (15B) agencée pour loger et soutenir ladite deuxième saillie (8) dudit panier, ladite paroi latérale proximale de support (16) et ladite paroi latérale distale de support (16A) étant reliées l'une à l'autre par au moins une paroi extérieure (19), ladite paroi latérale proximale de support (16) étant prolongée par au moins deux parties de cette paroi extérieure (19) qui s'étendent dans une direction parallèle audit axe de rotation (1C), ladite paroi latérale distale de support (16A) étant aussi prolongée par au moins deux parties de cette paroi extérieure (19) qui s'étendent dans une direction parallèle audit axe de rotation (1C), au moins une partie de cette paroi extérieure (19), s'étendant de la paroi latérale distale de support (16A), est reliée à une desdites parties de cette paroi extérieure (19) s'étendant de la paroi latérale proximale de support (16), ledit moyen de support de panier (15) étant agencé pour loger ledit panier avec lesdites première (8A) et deuxième (8) saillies du panier en suspension dans lesdites première (15A) et deuxième (15B) cavités de support.

8. Four selon l'une quelconque des revendications 1 à 7, **caractérisé en ce que** ledit moyen de support de panier (15) présente une longueur au moins supérieure à une longueur de panier, éventuellement additionnée d'une épaisseur dudit moyen de préhension (3) de manière de permettre une rotation aisée dudit panier dans ledit moyen de support de panier (15).

## Patentansprüche

1. Ofen, der einen verschließbaren Behälter (9) mit einer Öffnung (9A) umfasst, der eine Hitzequelle umfasst, die es erlaubt, Hitze ins Innere des erwähnten verschließbaren Behälters (9) zu blasen, der eine horizontale Antriebswelle umfasst, angeordnet, um durch einen Motor angetrieben zu werden, welcher sich gegenüber der erwähnten Öffnung (9A) befindet, der Bedienmittel (18) umfasst, um den erwähnten Motor in Drehung und die erwähnte Hitzequelle auf eine vorbestimmte Temperatur zu bringen, und einen Korb, welcher ein geschlossenes Volumen (6) beschreibt, angeordnet, um sich rund um eine Rotationsachse des Korbes (1C) in Drehung zu bewegen, wobei der erwähnte Ofen ferner eine Stütze (15) des erwähnten Korbes umfasst und der erwähnte Korb einen ersten Korbteil (1) und einen zweiten Korbteil (1A) umfasst, wobei der erwähnte erste (1) und der erwähnte zweite (1A) Korbteil kraftschlüssig miteinander verbunden sind und verschiebbar sind, wobei der erwähnte erste Korbteil (1) in eine Richtung parallel zur erwähnten Rotationsachse (1C), in Bezug zum erwähnten zweiten Korbteil (1A), verschiebbar ist, wobei sowohl der erste (1) als auch der zweite (1A) Korbteil eine distale Seitenwand (10, 11) aufweisen, das heißt, die vom Benutzer weiter entfernte Wand, lotrecht zur erwähnten Rotationsachse des Korbes (1C), wobei sowohl der erste (1) als auch der zweite (1A) Teil des Korbes eine proximale Seitenwand (2, 7) aufweisen, wobei der erwähnte Korb einen ersten Vorsprung (8A) aufweist, kraftschlüssig verbunden mit und sich erstreckend von der erwähnten distalen Seitenwand (11) des erwähnten zweiten Korbteils (1A) zur Außenseite des erwähnten Korbes, und einen zweiten Vorsprung (8), kraftschlüssig verbunden mit und sich erstreckend von der erwähnten proximalen Seitenwand (7) des erwähnten zweiten Korbteils (1A) zur Außenseite des erwähnten Korbes, wobei der erwähnte erste (8A) und der erwähnte zweite (8) Vorsprung jeweils gemäß der erwähnten Rotationsachse des Korbes (1C) ausgerichtet sind, wobei der erwähnte erste Vorsprung (8A) vorgesehen ist, um durch die erwähnte Antriebswelle angetrieben zu werden, **dadurch gekennzeichnet, dass** die erwähnten proximalen Seitenwände (2, 7) des erwähnten ersten (1) und des erwähnten zweiten (1A) Korbteils kalte oder lauwarme Wände sind, die die Wärme nicht spürbar leiten, dadurch, dass der erwähnte erste Korbteil (1) einen Griff (3) aufweist, und dadurch, dass der erwähnte verschließbare Behälter (9) durch die erwähnten kalten oder lauwarmen proximalen Seitenwände (2, 7) verschlossen wird, die die Wärme des erwähnten ersten (1) und des erwähnten zweiten (1A) Korbteils nicht spürbar leiten.

2. Ofen nach Anspruch 1, **dadurch gekennzeichnet, dass** er eine erste distale Stützaussparung (15A) umfasst, angeordnet, um den erwähnten ersten Vorsprung (8A) des erwähnten Korbes aufzunehmen, und dadurch, dass die erwähnte Stütze des Korbes (15) zumindest eine zweite proximale Stützaussparung (15B) umfasst, angeordnet, um den erwähnten zweiten Vorsprung (8) des erwähnten Korbes aufzunehmen, wobei die erwähnte Stütze konzipiert ist, um die Öffnung des erwähnten ersten Korbteils (1) durch Verschieben, wenn der Ofen stillsteht, nicht zu behindern.

3. Ofen nach Anspruch 1, **dadurch gekennzeichnet, dass** die erwähnte Stütze des Korbes (15) zumindest zwei Aussparungen umfasst, eine distale erste Stützaussparung (15A) und eine proximale zweite Stützaussparung (15B), wobei die erwähnte distale erste Stützaussparung (15A) angeordnet ist, um den erwähnten ersten Vorsprung (8A) des erwähnten Korbes aufzunehmen, wobei die erwähnte proximale zweite Stützaussparung (15B) angeordnet ist, um den erwähnten zweiten Vorsprung (8) des erwähnten Korbes aufzunehmen, wobei die erwähnte erste (15A) und die erwähnte zweite (15B) Stützaussparung miteinander so verbunden sind, dass sie die Öffnung des erwähnten ersten Korbteils (1) durch Verschieben, wenn der Ofen stillsteht, nicht behindern.

4. Ofen nach Anspruch 2 oder Anspruch 3, **dadurch gekennzeichnet, dass** die erwähnte distale erste Stützaussparung (15A) zumindest konkav ist und einen Boden umfasst, auf dem der erwähnte erste Vorsprung (8A) des erwähnten Korbes ruht, wobei die erwähnte proximale zweite Stützaussparung (15B) ebenfalls konkav ist und ebenfalls einen Boden umfasst, auf dem der erwähnte zweite Vorsprung (8) des erwähnten Korbes ruht.

5. Ofen nach Anspruch 4, **dadurch gekennzeichnet, dass** die erwähnte proximale zweite Stützaussparung (15B) durchgehend ist.

6. Ofen nach irgendeinem der Ansprüche 2 bis 3, **dadurch gekennzeichnet, dass** die erwähnte Stütze des Korbes (15) einen horizontalen Längsteil aufweist, der im Inneren des erwähnten verschließbaren Behälters (9) an der Decke des erwähnten Ofens befestigt ist, von der sich ein distaler Seitenteil und ein proximaler Seitenteil nach unten ausstrecken, die an ihren Enden, welche sich quer ins Innere erstrecken, respektive die erwähnte distale erste Stützaussparung (15A) und die erwähnte proximale zweite Stützaussparung umfassen.

7. Ofen nach irgendeinem der Ansprüche 2 bis 6, **dadurch gekennzeichnet, dass** die erwähnte Stütze des Korbes (15) eine proximale stützende Seitenwand (16) und eine distale stützende Seitenwand (16A) umfasst, deutlich parallel zu den erwähnten proximalen Seitenwänden (2) und (7) des erwähnten Korbes, wobei die erwähnte distale stützende Seitenwand (16A) mit der erwähnten distalen ersten Stützaussparung (15A) versehen ist, angeordnet, um den erwähnten ersten Vorsprung (8A) des erwähnten Korbes aufzunehmen und zu unterstützen, wobei die erwähnte proximale stützende Seitenwand (16) mit der erwähnten proximalen zweiten Stützaussparung (15B) versehen ist, angeordnet, um den erwähnten zweiten Vorsprung (8) des erwähnten Korbes aufzunehmen und zu unterstützen, wobei die erwähnte proximale stützende Seitenwand (16) und die erwähnte distale stützende Seitenwand (16A) miteinander durch zumindest eine Außenwand (19) verbunden sind, wobei die erwähnte proximale stützende Seitenwand (16) durch zumindest zwei Teile dieser Außenwand (19) verlängert wird, die sich in eine Richtung parallel zur erwähnten Rotationsachse (1C) ausstrecken, wobei die erwähnte distale stützende Seitenwand (16A) ebenso durch zumindest zwei Teile dieser Außenwand (19) verlängert wird, die sich in eine Richtung parallel zur erwähnten Rotationsachse (1C) ausstrecken, zumindest ein Teil dieser Außenwand (19), der sich von der distalen stützenden Seitenwand (16A) ausstreckt, mit einem der erwähnten Teile dieser Außenwand (19) verbunden ist, der sich von der proximalen stützenden Seitenwand (16) ausstreckt, wobei die erwähnte Stütze des Korbes (15) angeordnet ist, um den erwähnten Korb mit dem erwähnten ersten (8A) und dem erwähnten zweiten (8) Vorsprung des Korbes hängend in der erwähnten ersten (15A) und der erwähnten zweiten (15B) Stützaussparung aufzunehmen.

8. Ofen nach irgendeinem der Ansprüche 1 bis 7, **dadurch gekennzeichnet, dass** die erwähnte Stütze des Korbes (15) eine Länge aufweist, die zumindest größer als eine Korblänge ist, eventuell zuzüglich einer Dicke des erwähnten Griffes (3), sodass eine reibungslose Drehung des erwähnten Korbes in der erwähnten Stütze des Korbes (15) möglich ist.

## Claims

1. An oven comprising a closable receptacle (9) having an opening (9A), comprising a heat source make it possible to blow heat inside said closable receptacle (9), comprising a horizontal driveshaft arranged to be driven by a motor situated opposite said opening (9A), comprising control means (18) to cause said motor to rotate and bring said heat source to a predetermined temperature, and a basket describing a closed volume (6) arranged to rotate around a basket rotation axis (1C), said oven further comprising a support means (15) for said basket and said basket comprising a first basket part (1) and a second basket part (1A), said first (1) and second (1A) basket parts being secured to one another in rotation, and being sliding, said first basket part (1) sliding in a direction parallel to said rotation axis (1C), relative to said second basket part (1A), each of said first (1) and second (1A) basket parts having a distal side wall (10, 11), i.e., the wall furthest from the user, perpendicular to said basket rotation axis (1C), each of the first (1) and second (1A) basket parts having a proximal side wall (2, 7), said basket having a first projection (8A) secured to and extending from said proximal side wall (11) of said second basket part (1A) toward the outside of said basket, and a second projection (8) secured to and extending from said proximal side wall (7) of said second basket part (1A) toward the outside of said basket, said first (8A) and second (8) projections being aligned with one another along said basket rotation axis (1C), said first projection (8A) being provided to be driven by said driveshaft, **characterized in that** said proximal side walls (2, 7) of said first (1) and second (1A) basket parts are cold or lukewarm walls, substantially not conducting heat, **in that** said first basket part (1) has a gripping means (3), and **in that** said closable receptacle (9) is closed by said cold or lukewarm proximal side walls (2, 7), substantially not conducting heat, of said first (1) and said second (1A) basket parts.

2. The oven according to claim 1, **characterized in that** it comprises a first distal support cavity (15A) arranged to accommodate said first projection (8A) of said basket and **in that** said basket support means (15) comprises at least one second proximal support cavity (15B), arranged to accommodate said projection (8) of said basket, said support means being provided not to hinder the opening of said first basket part (1) by sliding when the oven is off.

3. The oven according to claim 1, **characterized in that** said basket support means (15) comprises at least two cavities, a first distal support cavity (15A) and a second proximal support cavity (15B), said first distal support cavity (15A) being arranged to accommodate said first projection (8A) of said basket, said second proximal support cavity (15B) being arranged to accommodate said second projection (8) of said basket, said first (15A) and second (15B) support cavities being connected to one another such that they do not hinder the opening of said first basket part (1) by sliding when the oven is off.

4. The oven according to claim 2 or claim 3, **characterized in that** said first distal support cavity (15A) is at least concave and includes a bottom in which said first projection (8A) of said basket rests, said second proximal support cavity (15B) also being concave and also including a bottom on which said second projection (8) of said basket rests.

5. The oven according to claim 4, **characterized in that** said second proximal support cavity (15B) is a through cavity.

6. The oven according to any one of claims 2 to 3, **characterized in that** said basket support means (15) has a horizontal longitudinal part that is fastened to the inside of said closable receptacle (9) on the roof of said oven, from which a distal side part and a proximal side part extend downward, which respectively include, at their ends extending transversely inward, said first distal support cavity (15A) and said second proximal support cavity (15B).

7. The oven according to any one of claims 2 to 6, **characterized in that** said basket support means (15) comprises a proximal side support wall (16) and a distal side support wall (16A), which are substantially parallel to said proximal side walls (2) and (7) of said basket, said distal side support wall (16A) being provided with said first distal support cavity (15A) arranged to house and support the first projection (8A) of said basket, said proximal side support wall (16) being provided with said second proximal support cavity (15B) arranged to house and support said second projection (8) of said basket, said proximal side support wall (16) and said distal side support wall (16A) being connected to one another by at least one outer wall (19), said proximal side support wall (16) being extended by at least two parts of this outer wall (19) extending in a direction parallel to said rotation axis (1C), said distal side support wall (16A) also being extended by at least two parts of this outer wall (19) that extend in a direction parallel to said rotation axis (1C), at least part of this outer wall (19), extending from the distal side support wall (16A), is connected to one of said parts of this outer wall (19) extending from the proximal side support wall (16), said basket support means (15) being arranged to house said basket with said first (8A) and second (8) projections of the basket suspended in said first (15A) and second (15B) support cavities.

8. The oven according to any one of claims 1 to 7, **characterized in that** said basket support means (15) has a length at least greater than a basket length, optionally with an added thickness of said gripping means (3) so as to allow easy rotation of said basket in said basket support means (15).
